# FASCICULE DE BREVET EUROPEEN

(11) **EP 3 897 318 B1**
(45) Date de publication et mention de la délivrance du brevet: **18.01.2023**
(21) Numéro de dépôt: 19828692.4
(22) Date de dépôt: 17.12.2019
(51) Int. Cl.: A47J 37/06

(54) **APPAREIL DE CUISSON DU TYPE FRITEUSE A AIR CHAUD MUNI D'UN PANIER COMPORTANT DES DEFLECTEURS**
MIT EINEM KORB MIT DEFLEKTOREN AUSGESTATTETES KOCHGERÄT VOM HEISSLUFTFRITTEUSENTYP
COOKING APPLIANCE OF THE HOT-AIR FRYER TYPE PROVIDED WITH A BASKET HAVING DEFLECTORS

(30) Priorité: 21.12.2018 FR 1873978
(43) Date de publication de la demande: 27.10.2021
(73) Titulaire: SEB S.A., 69130 Ecully (FR)
(72) Inventeur: PRIETO, Guillaume, 21380 Marsannay le Bois (FR); CORNU, Jérémy, 69007 Lyon (FR)
(74) Mandataire: SEB Développement
(86) Numéro de dépôt international: PCT/EP2019/085740
(87) Numéro de publication internationale: WO 2020/127334

(56) Documents cités:
- EP-A1- 2 347 186
- CN-A- 103 536 188
- DE-U1-202014 103 133

## Description

### Domaine technique

La présente invention concerne les appareils de cuisson, plus précisément les appareils de cuisson de type friteuse à air chaud permettant de réaliser une cuisson des aliments en utilisant très peu d'huile, voire pas du tout d'huile.

L'invention porte tout particulièrement sur de tels appareils de cuisson de type friteuse à air chaud qui comprennent des déflecteurs optimisant la circulation de l'air chaud dans une enceinte de cuisson de l'appareil, cette enceinte recevant un panier dans lequel sont placés les aliments à cuire. L'optimisation de la circulation de l'air chaud assure une cuisson plus homogène des aliments dans le panier.

Un principal objectif de l'invention est d'optimiser la conception de ces déflecteurs.

### Etat de la technique

Les appareils de cuisson à air chaud, par exemple du type friteuse à air chaud, sont connus de l'homme du métier. De tels appareils de cuisson permettent de réduire fortement la quantité de matière grasse, voire de la supprimer complètement, pendant la cuisson des aliments qui peuvent être d'origine végétale ou animale, par exemple des frites, des légumes, de la viande ou du poisson. En effet, la cuisson s'effectue avec peu ou pas d'huile grâce à de l'air chaud circulant dans une enceinte de cuisson, ce qui permet de consommer des aliments plus diététiques.

Un tel appareil de cuisson comprend généralement une coque et une cuve ; la cuve reçoit un panier dans lequel sont disposés des aliments à cuire. Une fois les aliments disposés dans le panier et celui-ci positionné dans la cuve, la coque de l'appareil de cuisson peut être fermée pour former une enceinte de cuisson incorporant la cuve, le panier et les aliments. De l'air chaud est ensuite pulsé dans cette enceinte de cuisson au moyen d'un dispositif de chauffe et d'un dispositif de circulation d'air, la circulation de l'air chaud dans l'enceinte assurant ainsi la cuisson des aliments.

Le dispositif de circulation d'air comprend un ventilateur qui permet d'aspirer de l'air frais depuis une entrée d'air frais agencée sur une paroi extérieure de la coque de l'appareil de cuisson, cet air frais étant acheminé jusqu'à l'enceinte de cuisson en passant par le dispositif de chauffe. L'air chaud dans l'enceinte de cuisson pénètre dans la cuve et passe au travers du fond ajouré du panier qui est placé dans cette cuve. Le ventilateur permet ensuite d'évacuer cet air chaud de l'enceinte de cuisson en l'extrayant par une sortie d'air chaud agencée sur la paroi extérieure de la coque.

La plupart des appareils de cuisson ont pour inconvénient de ne pas assurer une cuisson homogène des aliments dans le panier. En effet, l'air chaud passe au travers du fond ajouré du panier de manière aléatoire, ce qui engendre une mauvaise répartition de la chaleur cuisant les aliments dans le panier.

Pour pallier cet inconvénient, certains appareils de cuisson de type friteuse à air chaud prévoient un agencement de déflecteurs dans le fond de la cuve. Ces déflecteurs, de forme incurvée, s'étendent depuis le contour de la cuve et se rejoignent au centre du fond de ladite cuve. Les brevets européens EP2347186B1 et EP3162259B1 et la demande internationale de brevet WO2017215988A1 présentent de tels appareils de cuisson.

D'autres appareils de cuisson de type friteuse à air chaud prévoient des déflecteurs agencés en-dessous du fond du panier. Ces déflecteurs, de forme incurvée, s'étendent depuis le contour du fond ajouré du panier et se rejoignent au centre dudit fond. Le modèle d'utilité allemand DE202014103133U1 et la demande de brevet chinois CN103536188A présentent de tels appareils de cuisson.

Un avantage de l'agencement des déflecteurs sous le fond du panier plutôt que dans le fond de la cuve, est de permettre la réalisation de certaines recettes de cuisson d'aliments directement dans la cuve, et non dans le panier. En effet, cela est envisageable pour les appareils de cuisson sur lesquels la cuve est amovible de l'enceinte de cuisson, ce qui est le cas notamment pour les appareils de cuisson de type friteuse à air chaud comportant une cuve et un panier qui s'engagent sur l'appareil de cuisson à la manière d'un tiroir.

Bien que ces déflecteurs dans le fond de la cuve ou sous le fond du panier ont tendance à homogénéiser la cuisson des aliments placés dans le panier grâce aux turbulences générées dans le fond du panier, la demanderesse a constaté que les aliments disposés en partie centrale dans le panier demeurent moins cuits que ceux disposés en partie périphérique dans le panier. En effet, les aliments dans le panier sont plus froids et cuisent moins bien au centre du panier.

### Exposé de l'invention

L'appareil de cuisson de type friteuse à air chaud selon l'invention a pour objectif principal d'optimiser la conception des déflecteurs afin d'obtenir une cuisson homogène des aliments dans le panier, de sorte que tous les aliments placés dans le panier - y compris ceux au centre du panier - soient cuits de la même façon.

A ce titre, l'appareil de cuisson de type friteuse à air chaud, objet de l'invention, comprend une enceinte de cuisson incorporant une cuve et un panier logé de manière amovible dans ladite cuve. Le panier comprend un fond ajouré et une paroi de contour, définissant un contenant qui permet la réception des aliments durant la cuisson et leur manipulation afin de les placer avec le panier dans la cuve et de les extraire de celle-ci. L'appareil comprend également un dispositif de chauffe et un dispositif de circulation d'air configurés pour alimenter en air chaud l'enceinte de cuisson en faisant circuler ledit air chaud dans la cuve et à travers le fond ajouré du panier. De telles caractéristiques sont connues sur les appareils de cuisson de type friteuse à air chaud de l'état de la technique.

De manière remarquable, selon l'appareil objet de l'invention, le panier comprend des déflecteurs disposés sous le fond du panier et répartis à distance les uns des autres, lesdits déflecteurs comprenant un corps s'étendant selon une même direction que la paroi de contour du panier. En d'autres termes, la paroi de contour du panier s'étend selon une direction verticale en condition normale d'utilisation où l'appareil est posé sur un plan de travail horizontal et le corps de chaque déflecteur s'étend également en hauteur à la verticale et vers le bas, sous le fond du panier. En outre, le corps de chaque déflecteur présente une première partie disposée à proximité de la paroi de contour du panier et une deuxième partie disposée à l'écart de la paroi de contour du panier mais à proximité du centre du fond du panier, les deuxièmes parties des déflecteurs étant distantes les unes des autres et comprenant des extrémités interrompues au niveau d'une zone centrale s'étendant sous le fond du panier. En d'autres termes, le corps du déflecteur s'étend en longueur sous le fond du panier plus ou moins depuis la paroi de contour du panier et en direction du centre du fond du panier, les extrémités des corps des déflecteurs disposées à proximité du centre du fond du panier étant distantes les unes des autres et arrêtées au niveau d'un périmètre de la zone centrale sous le fond du panier. Cette conception des déflecteurs permet de créer des turbulences dans le fond du panier pour homogénéiser la cuisson en forçant davantage le flux d'air à traverser la zone centrale sous le fond du panier.

Selon une réalisation préférentielle, l'appareil objet de l'invention comprend un anneau fixé aux deuxièmes parties des corps des déflecteurs. Cela permet de rigidifier les déflecteurs entre eux afin d'éviter qu'ils ne vibrent sous l'effet du flux d'air chaud et qu'ils ne génèrent des nuisances sonores, tout particulièrement lorsque les corps de ces déflecteurs sont constitués de fines plaques susceptibles de fléchir facilement sous le flux d'air chaud. Cela n'exclut pas la mise en œuvre de variantes de réalisation, sans anneau et de préférence avec des corps de déflecteurs plus épais.

Selon cette réalisation précitée de l'appareil, la surface délimitée par l'anneau est de préférence supérieure à la surface de la zone centrale. En d'autres termes, l'anneau est de diamètre supérieur au diamètre de la zone centrale, l'anneau étant fixé sur les déflecteurs ailleurs qu'aux extrémités des deuxièmes parties des corps des déflecteurs, lesdites extrémités étant positionnées sur ledit diamètre de la zone centrale.

Selon une réalisation de l'appareil objet de l'invention, la première partie de corps de chaque déflecteur comprend une extrémité disposée au-delà de la paroi de contour du panier. En d'autres termes, la première partie de chaque déflecteur s'étend longitudinalement vers l'extérieur au-delà de la paroi de contour du panier. Cela permet avantageusement de happer l'air chaud tourbillonnant entre le panier et la cuve, dans laquelle ledit panier est logé, en sorte de renvoyer cet air chaud sous le fond du panier et vers la zone centrale.

Selon une réalisation de l'appareil objet de l'invention, la première partie et la seconde partie du corps de chaque déflecteur sont courbées, la première partie présentant une courbure inversée par rapport à la deuxième partie. Cette forme du corps du déflecteur favorise la circulation de l'air chaud sous le fond du panier en direction de la zone centrale. Cela n'exclut pas la mise en œuvre d'autres formes incurvées pour le corps du déflecteur, voire un corps plat sans galbe, sans sortir du cadre de l'invention.

Selon une réalisation de l'appareil objet de l'invention, les déflecteurs sont reliés à un bord inférieur de la paroi de contour du panier. Des variantes sont toutefois envisageables en reliant les déflecteurs au fond du panier. De préférence, selon cette réalisation, les déflecteurs et la paroi de contour du panier sont issus d'une seule et même pièce, ce qui évite un assemblage supplémentaire des déflecteurs avec la paroi de contour. De préférence, selon cette réalisation, le fond ajouré comprend une grille amovible supportée par les bords supérieurs des déflecteurs et le cas échéant supportée par l'anneau fixé aux deuxièmes parties des déflecteurs. En effet, étant donné que les déflecteurs sont reliés à la paroi de contour du panier, il est possible de les utiliser comme support de la grille amovible. En la présence d'un anneau et selon la position de celui-ci vis-à-vis des secondes parties des corps des déflecteurs, ledit anneau pourra participer également au support de la grille amovible. Ainsi, il n'est pas nécessaire de prévoir des pattes de support supplémentaires sur la paroi de contour du panier pour supporter la grille amovible, contrairement à l'art antérieur.

Des variantes d'appareils selon l'invention sont toutefois envisageables en prévoyant des pièces distinctes pour les déflecteurs et la paroi de contour et en assemblant lesdites pièces de sorte à les relier entre elles. Un tel assemblage permettrait notamment de conserver la possibilité de retirer les déflecteurs du panier, par exemple pour faciliter leur nettoyage ou, si besoin, leur remplacement. Selon ces variantes de réalisation, des moyens d'assemblage sont agencés entre chacun des déflecteurs et le bord inférieur de la paroi de contour du panier.

De préférence, ces moyens d'assemblage sont choisis parmi un système à clip, un système à baïonnette et un système d'emmanchement.

Selon une réalisation de l'appareil objet de l'invention, les bords inférieurs des corps des déflecteurs s'inscrivent dans un même plan et forment des appuis permettant de poser de manière stable le panier sur un plan de support. De préférence, selon cette réalisation, le panier comprend une poignée de manipulation qui comporte une extrémité inférieure s'inscrivant dans le même plan que celui dans lequel s'inscrivent les bords inférieurs des corps des déflecteurs. Dans ce cas, l'extrémité de la poignée constitue un appui complémentaire aux appuis formés par les bords inférieurs des corps des déflecteurs. Des variantes sont toutefois envisageables avec une extrémité de poignée qui est disposée au-dessus du plan dans lequel s'inscrivent les bords inférieurs des corps des déflecteurs, ce qui permet également de poser de manière stable le panier au milieu du plan de support sans que l'extrémité de la poignée ne bute contre ledit plan de support. En effet, une poignée trop longue avec son extrémité disposée en-dessous du plan dans lequel s'inscrivent les bords inférieurs des corps des déflecteurs imposerait de poser le panier au bord du plan de support pour éviter que l'extrémité de la poignée ne bute contre ce plan de support, ce qui compromettrait la stabilité dudit panier posé sur le plan de support.

Selon une réalisation de l'appareil objet de l'invention, la cuve comprend un fond et une paroi de contour munie d'un bord supérieur. En outre, le panier comprend une patte de support prenant appui sur ledit bord supérieur de la cuve pour supporter le panier logé dans la cuve de manière à ce que les bords inférieurs des corps des déflecteurs soient maintenus à distance du fond de la cuve. Cela évite tout contact des déflecteurs sous le fond du panier avec le fond de la cuve, évitant ainsi de rayer ledit fond de la cuve.

L'invention concerne également un procédé de fabrication d'un panier d'un appareil de cuisson de type friteuse à air chaud présentant l'une quelconque des caractéristiques précitées. Le procédé comprend les étapes suivantes :
- disposer d'une feuille métallique,
- découper la paroi de contour et les déflecteurs sur la feuille métallique,
- plier la feuille métallique ainsi découpée pour former la paroi de contour et les déflecteurs.

Ainsi, les déflecteurs et la paroi de contour du panier sont formés d'une seule et même pièce et mis en œuvre par découpage et pliage d'une feuille métallique, les bords longitudinaux de la feuille découpée étant joints et fixés entre eux après pliage de ladite feuille découpée.

Selon une réalisation du procédé, le découpage de la feuille métallique est réalisé par découpage laser. Des variantes sont envisageables, par exemple un découpage à la presse, ce qui nécessitera éventuellement un ébavurage des bords découpés sur la feuille métallique.

### Brève description des figures

Les caractéristiques et avantages de l'invention apparaîtront à la lecture de la description suivante s'appuyant sur des figures, parmi lesquelles :
la figure 1 est une vue en perspective montrant en coupe un exemple d'appareil de cuisson de type friteuse à air chaud ;
la figure 2 est une vue en perspective montrant une conception préférentielle du panier ;
la figure 3 est une vue en perspective montrant le panier de la figure 2, duquel le fond ajouré a été retiré ;
la figure 4 est une vue en plan montrant une feuille métallique après découpage, ladite feuille métallique permettant la mise en œuvre de la paroi de contour et des déflecteurs du panier, en une seule et même pièce ;
la figure 5 est une vue en perspective illustrant le panier logé dans la cuve ;
la figure 6 est une vue de dessus de la figure 5, montrant le panier logé dans la cuve, le fond ajouré du panier étant toutefois retiré ;
la figure 7 est une vue en perspective montrant partiellement la cuve avec le panier logé dans celle-ci.

### Description détaillée de l'invention

Dans la suite de la description, l'appareil de cuisson est constitué d'un exemple de friteuse à air chaud, d'autres conceptions de friteuses à air chaud existant et pouvant également comporter les caractéristiques essentielles objets de la présente invention qui vont être détaillées ci-après.

Dans la suite de la description, le terme friteuse sera utilisé pour dénommer l'appareil de cuisson, sauf indication dans le texte.

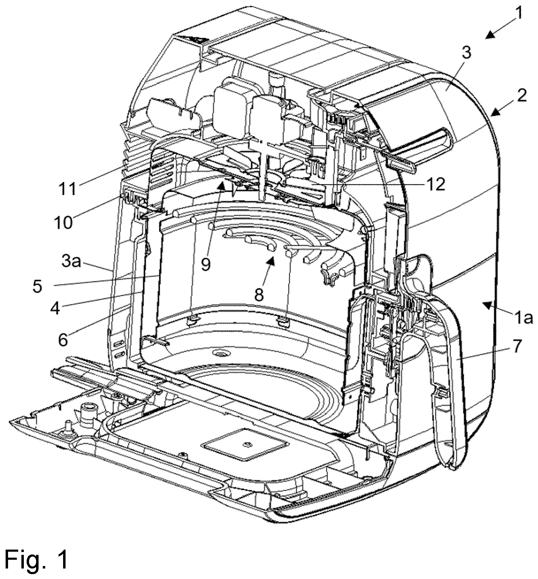

En regard de la figure 1, l'appareil de cuisson 1 de type friteuse à air chaud comprend une coque 2 comportant une paroi extérieure 3 munie d'une paroi arrière 3a opposée à une face avant 1a de cet appareil de cuisson 1 de type friteuse à air chaud. Cette face avant 1a permet l'insertion d'une cuve 4 et d'un panier 5, à la manière d'un tiroir, dans une enceinte de cuisson 6 agencée à l'intérieur de la coque 2, la cuve 4 et le panier 5 étant manipulés au moyen d'une poignée de manipulation 7. Cette poignée de manipulation 7 permet non seulement de manipuler le panier 5 seul pour le placer dans la cuve 4 ou le retirer de ladite cuve 4, mais aussi de fixer le panier 5 en position dans la cuve 4 de sorte à manipuler concomitamment la cuve 4 avec le panier 5 pour leur insertion simultanée dans l'enceinte de cuisson 6 et leur retrait de ladite enceinte de cuisson 6, à la manière d'un tiroir. Un dispositif de chauffe 8 est agencé à l'intérieur de la coque 2, au-dessus de l'enceinte de cuisson 6. Un dispositif de circulation d'air 9 permet d'aspirer de l'air frais au travers d'une entrée d'air 10 qui est agencée sur la paroi arrière 3a ; cet air frais est acheminé vers le dispositif de chauffe 8 afin d'être chauffé puis, une fois chauffé, vers l'enceinte de cuisson 6. Cet air chaud pénètre dans la cuve 4 puis dans le panier 5 en passant par le dessous du panier 5. L'air chaud est ensuite refoulé à l'extérieur de l'appareil de cuisson 1 de type friteuse à air chaud, par une sortie d'air 11 aménagée sur la paroi arrière 3a. Le dispositif de circulation d'air 9 comprend un ventilateur 12 permettant d'acheminer l'air de l'entrée d'air 10 jusqu'à la sortie d'air 11. Ces caractéristiques générales sont connues sur les appareils de cuisson de type friteuse à air chaud actuellement sur le marché, raisons pour lesquelles elles ne seront pas détaillées ; l'homme du métier pourra par exemple se référer aux appareils de cuisson à air chaud développées par la demanderesse, par exemple celle commercialisée sous la dénomination FRY DELIGHT^{®}. Tel que précité, l'appareil de cuisson 1 de type friteuse à air chaud illustrée en figure 1 est du type à tiroir, mais il est possible de mettre en œuvre l'invention sur d'autres conceptions d'appareil de cuisson de type friteuse à air chaud, notamment celles du type à couvercle, comme par exemple celles commercialisées par la demanderesse sous la dénomination ACTIFRY ^{®}.

La description suivante s'attache à mettre en évidence les caractéristiques essentielles de l'invention qui portent notamment sur la conception de déflecteurs en-dessous du fond du panier 5.

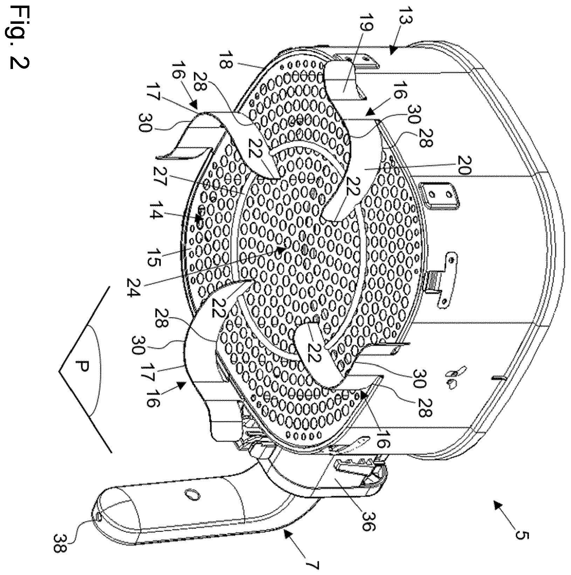

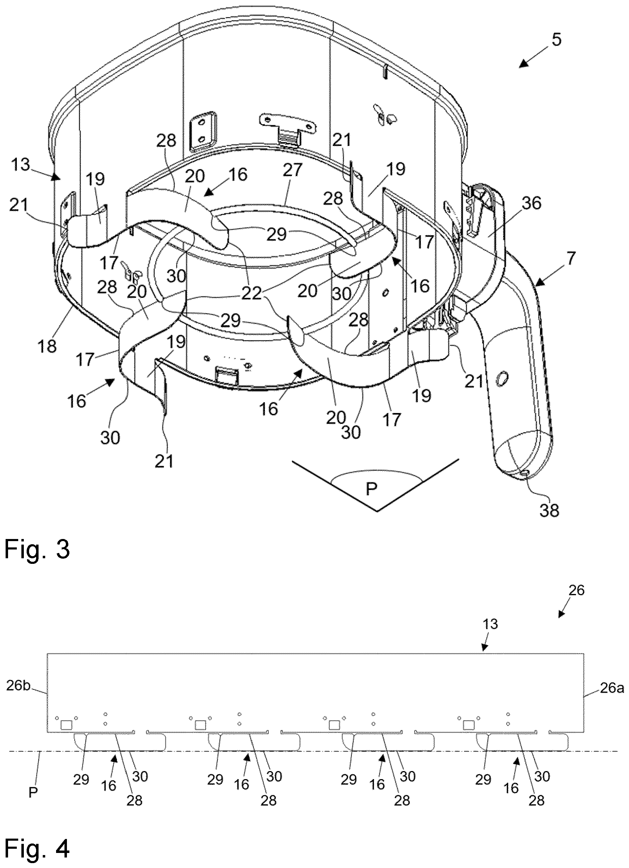

En regard des figures 2 et 3, le panier 5 comprend une paroi de contour 13 et un fond ajouré 14. Le fond ajouré 14 est constitué d'une grille 15 qui est amovible afin de faciliter son nettoyage ou de permettre son remplacement par une autre grille adaptée à un autre type d'aliments à cuire. Le panier 5 comprend quatre déflecteurs 16 qui sont agencés en-dessous de la grille 15, lorsque celle-ci est en place sur le panier 5 ; les déflecteurs 16 sont répartis uniformément sous cette grille 15. Ces déflecteurs 16 comportent chacun un corps 17 de fine épaisseur qui présente une forme incurvée, ledit corps 17 étant disposé dans le prolongement d'un bord inférieur 18 de la paroi de contour 13. En d'autres termes, en condition normale d'utilisation où l'appareil de cuisson 1 de type friteuse à air chaud est posé sur un plan de support, par exemple une table ou un plan de cuisine, la paroi de contour 13 du panier 5 s'étend en hauteur verticalement et le corps 17 de chaque déflecteur 16 s'étend également en hauteur verticalement et vers le bas, en-dessous du bord inférieur 18 de la paroi de contour 13.

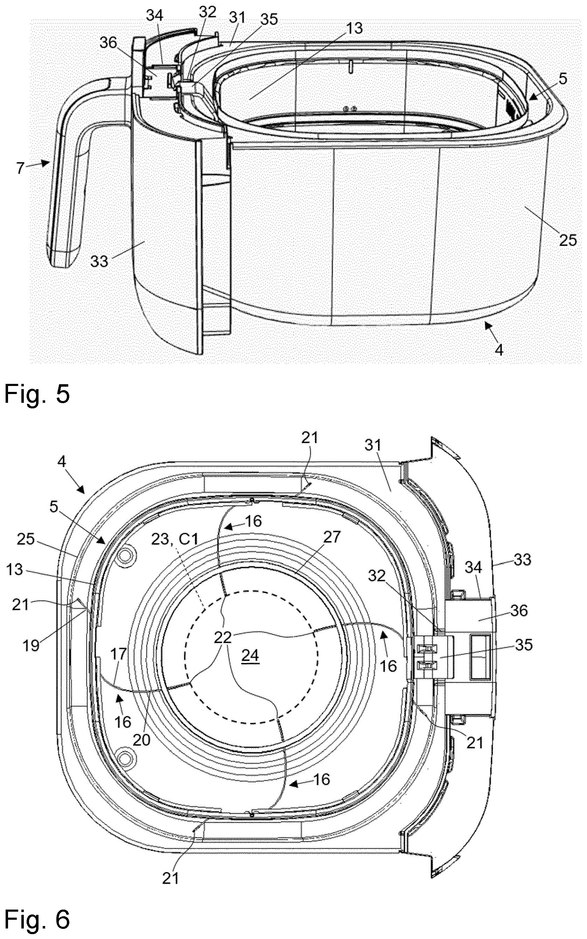

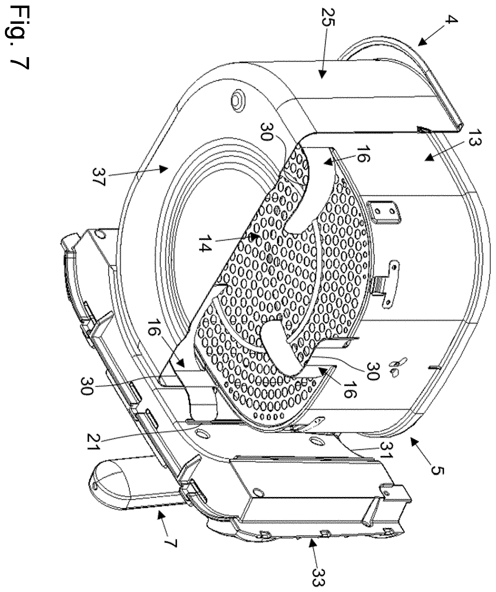

En regard des figures 2, 3 et 6, le corps 17 de chaque déflecteur 16 comprend une première partie 19 et une seconde partie 20 qui comprennent des courbures inversées. La première partie 19 du corps 17 est positionnée à proximité du bord inférieur 18 de la paroi de contour 13 et est reliée audit bord inférieur 18. Cette première partie 19 du corps 17 a une extrémité 21 qui s'étend vers l'extérieur du panier 5, au-delà de la paroi de contour 13. La seconde partie 20 du corps 17 s'éloigne de la paroi de contour 13, tout en se rapprochant vers le centre du fond ajouré 14 du panier 5. Cette seconde partie 20 du corps 17 présente une extrémité 22 qui est arrêtée au niveau du périmètre 23 d'une zone centrale 24 représentée par un cercle fictif C1 passant par toutes les extrémités 22 des corps 17 des déflecteurs 16. Les extrémités 22 des corps 17 des déflecteurs 16 sont distantes les unes des autres et uniformément réparties autour de ce cercle fictif C1. L'interruption de ces extrémités 22 des corps 17 des déflecteurs 16 au niveau du périmètre 23 de la zone centrale 24 favorise l'apport d'air chaud au niveau de ladite zone centrale 24, ledit air chaud étant aspiré au travers du fond ajouré 14 du panier 5 par l'admission du ventilateur 12. Les extrémités 21 des premières parties 19 des corps 17 des déflecteurs 16 sont positionnées à proximité d'une paroi de contour 25 de la cuve 4 lorsque le panier 5 est logé dans ladite cuve 4, comme l'illustrent les figures 6 et 7, ce qui permet de happer l'air chaud tourbillonnant qui est refoulé par le ventilateur 12 et qui circule entre la paroi de contour 13 du panier 5 et la paroi de contour 25 de la cuve 4, en sorte de ramener cet air chaud tourbillonnant vers la zone centrale 24, sous le fond ajouré 14 du panier 5.

En regard de la figure 4, la paroi de contour 13 et les déflecteurs 16 du panier 5 sont mis en œuvre à partir d'une feuille métallique 26 qui est découpée au laser afin d'obtenir une précision de découpe, sans bavure. Une fois la découpe de la feuille métallique 26 réalisée, celle-ci se trouvant tel qu'illustré sur la figure 4, ladite feuille métallique 26 est pliée de manière à donner la forme incurvée aux déflecteurs 16 et à former ladite paroi de contour 13 du panier 5, des extrémités 26a, 26b de la feuille métallique 26 étant jointes et fixées entre elles selon diverses techniques d'assemblage connues, par exemple par rivetage, par soudage ou par sertissage.

En regard des figures 2, 3, 4, 6 et 7, les deuxièmes parties 20 des corps 17 des déflecteurs 16 sont solidarisées entre elles au moyen d'un anneau 27 qui est soudé sur les bords supérieurs 28 desdits corps 17. Ces bords supérieurs 28 comprennent chacun une petite cavité 29 dans laquelle se loge l'anneau 27, ce qui permet d'encastrer en partie ledit anneau 27 dans lesdits bords supérieurs 28. Cet anneau 27 présente un diamètre supérieur à celui du cercle fictif C1 de la zone centrale 24, de sorte que ledit anneau 27 soit disposé à distance des extrémités 22 desdites deuxièmes parties 20 des corps 17. Cet anneau 27 permet de rigidifier entre elles les deuxièmes parties 20 des corps 17 des déflecteurs 16.

En regard des figures 2 et 3, notamment, la grille 15 amovible repose sur les bords supérieurs 28 des corps 17 des déflecteurs 16 et sur l'anneau 27. Ainsi, il n'est pas nécessaire d'utiliser des pattes de support additionnelles pour maintenir la grille 15, contrairement à l'art antérieur. L'anneau 27 pourrait être positionné différemment sur les deuxièmes parties 20 des corps 17 des déflecteurs 16, par exemple au niveau des bords inférieurs 30 desdits corps 17 ; dans ce cas, la grille 15 serait supportée intégralement par les bords supérieurs 28 des corps 17 des déflecteurs 16.

En regard des figures 5 à 7, la paroi de contour 25 de la cuve 4 comprend un bord supérieur 31 sur lequel est agencé une encoche 32. La cuve 4 comprend une façade 33 fixée au côté avant de la paroi de contour 25. Cette façade 33 comprend sur son côté supérieur une zone de réception 34 communiquant avec l'encoche 32. Le panier 5 comprend une patte de support 35 qui est fixée sur le côté avant de la paroi de contour 13 dudit panier 5. Cette patte de support 35 est assemblée avec un corps 36 de la poignée de manipulation 7. Lorsque le panier 5 est logé dans la cuve 4, le corps 36 de la poignée de manipulation 7 est positionné dans la zone de réception 34 sur la façade 33 et la patte de support 35 vient en appui contre l'encoche 32 agencée sur le bord supérieur 31 de la paroi de contour 25 de la cuve 4. Dans cette position, la patte de support 35 assure le maintien et l'arrêt du panier 5 dans la cuve 4, de telle sorte que les bords inférieurs 30 des corps 17 des déflecteurs 16 demeurent à l'écart du fond 37 de la cuve 4, pour ne pas risquer de rayer ledit fond 37 lors de la mise en place du panier 5 dans la cuve 4.

En regard des figures 2 à 4, les bords inférieurs 30 des corps 17 des déflecteurs 16 sont positionnés dans un même plan P. De même, l'extrémité inférieure 38 de la poignée de manipulation 7 est également disposée dans ce même plan P. Ainsi, les bords inférieurs 30 des corps 17 des déflecteurs 16 et l'extrémité inférieure 38 de la poignée de manipulation 7 constituent des appuis venant en contact du plan de support (non illustré), par exemple une table ou un plan de cuisine, sur lequel est posé le panier durant la mise en place des aliments à cuire et durant le retrait des aliments cuits.

Des variantes sont envisageables dans le cadre de l'invention. Dans l'exemple décrit précédemment à l'appui des figures 1 à 7, le panier 5 comprend quatre déflecteurs 16 ; le nombre de déflecteurs 16 pourrait toutefois varier, par exemple entre deux et six déflecteurs 16.

La paroi de contour 13 du panier 5 et les déflecteurs 16 sont mis en œuvre en une seule pièce ; on pourrait toutefois prévoir des pièces séparées, les déflecteurs 16 étant dans ce cas soit fixés au bord inférieur 18 de la paroi de contour 13, par exemple par rivetage, soudage ou sertissage, soit assemblés de manière amovible audit bord inférieur 18 grâce à des moyens d'assemblage. Ces moyens d'assemblage sont choisis parmi un système à clip, un système à baïonnette et un système d'emmanchement. Le système à clip peut être mis en œuvre directement entre le bord supérieur 28 du corps 17 de chaque déflecteur 16 et le bord inférieur 18 de la paroi de contour 13 du panier 5 qui se clipsent l'un dans l'autre ou par l'intermédiaire de pinces à ressort par exemple montées sur la paroi de contour 13 et se clipsant respectivement sur les corps 17 des déflecteurs 16. Le système à baïonnette peut être mis en œuvre directement entre le bord supérieur 28 du corps de chaque déflecteur 16 et le bord inférieur 18 de la paroi de contour 13 du panier 5, en effectuant par exemple une rotation d'un quart de tour ou d'un demi-tour des déflecteurs pour assurer leur assemblage avec la paroi de contour 13 du panier 5. Le système d'emmanchement peut être mis en œuvre par exemple en prévoyant une tige cannelée sur le bord supérieur 28 du corps 17 de chaque déflecteur 16 et des logements cannelés sur le bord inférieur 18 de la paroi de contour 13 du panier 5, les tiges cannelées et les logements cannelés étant conçus pour assurer un montage serré par emboîtement desdits déflecteurs 16 sur ladite paroi de contour 13 du panier 5, selon une position définie similaire à celle des figures 2 et 3.

On pourrait aussi prévoir une poignée de manipulation 7 dont l'extrémité inférieure 38 serait positionnée au-dessus du plan P, dans quel cas seuls les bords inférieurs 30 des déflecteurs 16 constitueraient des appuis pour poser de manière stable le panier 5 sur un plan de support.

## Revendications

1. Appareil de cuisson (1) de type friteuse à air chaud, comprenant:
- une enceinte de cuisson (6) incorporant une cuve (4) et un panier (5) logé de manière amovible dans ladite cuve, ledit panier comprenant un fond (14) ajouré et une paroi de contour (13),
- un dispositif de chauffe (8) et un dispositif de circulation d'air (9) configurés pour alimenter en air chaud l'enceinte de cuisson (6) en faisant circuler cet air chaud dans la cuve et à travers le fond ajouré (14) du panier (5),
- ledit panier (5) comprend des déflecteurs (16) disposés sous le fond (14) du panier et répartis à distance les uns des autres, lesdits déflecteurs (16) comprenant un corps (17) s'étendant selon une même direction que la paroi de contour (13) et présentant chacun une première partie (19) disposée à proximité de la paroi de contour (13) du panier (5) et une deuxième partie (20) disposée à l'écart de la paroi de contour (13) du panier (5)mais à proximité du centre du fond (14) du panier (5),
- ledit appareil de cuisson (1) étant **caractérisé en ce que** les deuxièmes parties (20) des déflecteurs (16) étant distantes les unes des autres et comprenant des extrémités (22) interrompues au niveau d'une zone centrale (24) s'étendant sous le fond (14) du panier (5).

2. Appareil de cuisson (1) selon la revendication 1, lequel comprend un anneau (27) fixé aux deuxièmes parties (20) des déflecteurs (16).

3. Appareil de cuisson (1) selon la revendication 2 dans lequel la surface délimitée par l'anneau (27) est supérieure à la surface de la zone centrale (24).

4. Appareil de cuisson (1) selon l'une quelconque des revendications 1 à 3, dans lequel la première partie (19) de corps (17) de chaque déflecteur (16) comprend une extrémité (21) disposée au-delà de la paroi de contour (13) du panier (5).

5. Appareil de cuisson (1) selon l'une quelconque des revendications 1 à 4, dans lequel la première partie (19) du corps (17) de chaque déflecteur (16) et la seconde partie (20) du corps (17) de chaque déflecteur (16) sont courbées, la première partie (19) présentant une courbure inversée par rapport à la deuxième partie (20).

6. Appareil de cuisson (1) selon l'une quelconque des revendications 1 à 5, dans lequel les déflecteurs (16) sont reliés à un bord inférieur (18) de la paroi de contour (13) du panier (5).

7. Appareil de cuisson (1) selon la revendication 6, dans lequel les déflecteurs (16) et la paroi de contour (13) du panier (5) sont issus d'une seule et même pièce.

8. Appareil de cuisson (1) selon la revendication 6, dans lequel des moyens d'assemblage sont agencés entre chacun des déflecteurs (16) et le bord inférieur (18) de la paroi de contour (13) du panier (5).

9. Appareil de cuisson (1) selon la revendication 8, dans lequel les moyens d'assemblage sont choisis parmi un système à clip, un système à baïonnette et un système d'emmanchement.

10. Appareil de cuisson (1) selon l'une des revendications 6 à 9, dans lequel le fond (14) ajouré comprend une grille (15) amovible supportée par des bords supérieurs (28) des déflecteurs (16) et le cas échéant supportée par l'anneau (27) fixé aux deuxièmes parties (20) des déflecteurs (16).

11. Appareil de cuisson (1) selon l'une quelconque des revendications 1 à 10, dans lequel des bords inférieurs (30) des corps (17) des déflecteurs (16) s'inscrivent dans un même plan (P) et forment des appuis permettant de poser de manière stable le panier (5) sur un plan de support.

12. Appareil de cuisson (1) selon la revendication 11, dans lequel le panier (5) comprend une poignée de manipulation (7) comportant une extrémité inférieure (38) s'inscrivant dans le même plan (P) que celui dans lequel s'inscrivent les bords inférieurs (30) des corps (17) des déflecteurs (16).

13. Appareil de cuisson (1) selon l'une quelconque des revendications 1 à 12, dans lequel la cuve (4) comprend un fond (37) et une paroi de contour (25) munie d'un bord supérieur (31), le panier (5) comprenant une patte de support (35) prenant appui sur ledit bord supérieur (31) pour supporter le panier (5) logé dans la cuve (4) de manière à ce que les bords inférieurs (30) des déflecteurs (16) soient maintenus à distance du fond (37) de la cuve (4).

14. Procédé de fabrication d'un panier (5) d'un appareil de cuisson (1) selon la revendication 7 ou l'une quelconque des revendications 10 à 13 rattachée à la revendication 7, comprenant les étapes suivantes :
- disposer d'une feuille métallique (26),
- découper la paroi de contour (13) et les déflecteurs (16) sur la feuille métallique (26),
- plier la feuille métallique (26) ainsi découpée pour former la paroi de contour (13) et les déflecteurs (16).

15. Procédé selon la revendication 14, dans lequel le découpage de la feuille métallique (26) est réalisé par découpage laser.

## Patentansprüche

1. Gargerät (1) vom Typ einer Heißluftfritteuse, umfassend:
- einen Garraum (6), der eine Wanne (4) und einen Korb (5) beinhaltet, welcher herausnehmbar in der Wanne untergebracht ist, wobei der Korb einen durchbrochenen Boden (14) und eine Konturwand (13) umfasst,
- eine Heizvorrichtung (8) und eine Luftzirkulationsvorrichtung (9), die dafür ausgelegt sind, den Garraum (6) mit heißer Luft zu speisen, indem sie diese heiße Luft in der Wanne und durch den durchbrochenen Boden (14) des Korbs (5) zirkulieren lassen,
- der Korb (5) Deflektoren (16) umfasst, die unter dem Boden (14) des Korbs angeordnet sind und in Abstand voneinander verteilt sind, wobei die Deflektoren (16) einen Körper (17) umfassen, der sich in derselben Richtung wie die Konturwand (13) erstreckt und je einen ersten Teil (19), der in der Nähe der Konturwand (13) des Korbs (5) angeordnet ist, und einen zweiten Teil (20) aufweisen, der von der Konturwand (13) des Korbs (5) entfernt, aber in der Nähe der Mitte des Bodens (14) des Korbs (5) angeordnet ist,
- wobei das Gargerät (1) **dadurch gekennzeichnet ist, dass** die zweiten Teile (20) der Deflektoren (16) voneinander beabstandet sind und Enden (22) umfassen, die im Bereich einer Mittelzone (24), welche sich unter dem Boden (14) des Korbs (5) erstreckt, unterbrochen sind.

2. Gargerät (1) nach Anspruch 1, das einen Ring (27) umfasst, der an den zweiten Teilen (20) der Deflektoren (16) fixiert ist.

3. Gargerät (1) nach Anspruch 2, wobei die von dem Ring (27) begrenzte Fläche größer ist als die Fläche der Mittelzone (24).

4. Gargerät (1) nach einem der Ansprüche 1 bis 3, wobei der erste Teil (19) des Körpers (17) jedes Deflektors (16) ein Ende (21) umfasst, das jenseits der Konturwand (13) des Korbs (5) angeordnet ist.

5. Gargerät (1) nach einem der Ansprüche 1 bis 4, wobei der erste Teil (19) des Körpers (17) jedes Deflektors (16) und der zweite Teil (20) des Körpers (17) jedes Deflektors (16) gekrümmt sind, wobei der erste Teil (19) eine in Bezug auf den zweiten Teil (20) umgekehrte Krümmung aufweist.

6. Gargerät (1) nach einem der Ansprüche 1 bis 5, wobei die Deflektoren (16) mit einer Unterkante (18) der Konturwand (13) des Korbs (5) verbunden sind.

7. Gargerät (1) nach Anspruch 6, wobei die Deflektoren (16) und die Konturwand (13) des Korbs (5) aus ein und demselben Werkstück hervorgegangen sind.

8. Gargerät (1) nach Anspruch 6, wobei zwischen jedem der Deflektoren (16) und der Unterkante (18) der Konturwand (13) des Korbs (5) Befestigungsmittel eingerichtet sind.

9. Gargerät (1) nach Anspruch 8, wobei die Befestigungsmittel ausgewählt sind aus einem Clipsystem, einem Bajonettsystem und einem Stecksystem.

10. Gargerät (1) nach einem der Ansprüche 6 bis 9, wobei der durchbrochene Boden (14) ein herausnehmbares Gitter (15) umfasst, das von Oberkanten (28) der Deflektoren (16) getragen wird und gegebenenfalls von dem an den zweiten Teilen (20) der Deflektoren (16) fixierten Ring (27) getragen wird.

11. Gargerät (1) nach einem der Ansprüche 1 bis 10, wobei Unterkanten (30) der Körper (17) der Deflektoren (16) in derselben Ebene (P) liegen und Auflagen bilden, die es ermöglichen, den Korb (5) stabil auf eine Tragebene zu setzen.

12. Gargerät (1) nach Anspruch 11, wobei der Korb (5) einen Bediengriff (7) umfasst, der ein unteres Ende (38) umfasst, das in derselben Ebene (P) liegt wie die, in der die Unterkanten (30) der Körper (17) der Deflektoren (16) liegen.

13. Gargerät (1) nach einem der Ansprüche 1 bis 12, wobei die Wanne (4) einen Boden (37) und eine Konturwand (25) umfasst, die mit einer Oberkante (31) versehen ist, wobei der Korb (5) eine Tragklaue (35) umfasst, die an der Oberkante (31) in Auflage geht, um den in der Wanne (4) untergebrachten Korb (5) so zu tragen, dass die Unterkanten (30) der Deflektoren (16) in Abstand vom Boden (37) der Wanne (4) gehalten werden.

14. Verfahren zur Herstellung eines Korbs (5) eines Gargeräts (1) nach Anspruch 7 oder einem der Ansprüche 10 bis 13 in Kombination mit Anspruch 7, das die folgenden Schritte umfasst:
- Bereitstellen eines Metallblechs (26),
- Zuschneiden der Konturwand (13) und der Deflektoren (16) aus dem Metallblech (26),
- Biegen des so zugeschnittenen Metallblechs (26), um die Konturwand (13) und die Deflektoren (16) zu bilden.

15. Verfahren nach Anspruch 14, wobei das Zuschneiden des Metallblechs (26) durch Laserschneiden erfolgt.

## Claims

1. Cooking appliance (1) of the hot-air fryer type, comprising:
- a cooking chamber (6) incorporating a vessel (4) and a basket (5) removably housed in said vessel, said basket comprising a perforated bottom (14) and a contoured wall (13),
- a heating device (8) and an air circulation device (9) configured to supply hot air to the cooking chamber (6) by making this hot air circulate in the vessel and through the perforated bottom (14) of the basket (5),
- said basket (5) comprises deflectors (16) disposed on the bottom (14) of the basket and distributed at a distance from one another, said deflectors (16) comprising a body (17) extending in one same direction as the contoured wall (13) and each having a first part (19) disposed close to the contoured wall (13) of the basket (5) and a second part (20) disposed at a distance from the contoured wall (13) of the basket (5), but close to the centre of the bottom (14) of the basket (5),
- said cooking appliance (1) being **characterised in that** the second parts (20) of the deflectors (16) being spaced apart from one another and comprising ends (22) that are interrupted in the region of a central zone (24) extending under the bottom (14) of the basket (5).

2. Cooking appliance (1) according to claim 1, which comprises a ring (27) fixed to the second parts (20) of the deflectors (16).

3. Cooking appliance (1) according to claim 2, wherein the surface delimited by the ring (27) is greater than the surface of the central zone (24).

4. Cooking appliance (1) according to any one of claims 1 to 3, wherein the first part (19) of the body (17) of each deflector (16) comprises an end (21) disposed beyond the contoured wall (13) of the basket (5).

5. Cooking appliance (1) according to any one of claims 1 to 4, wherein the first part (19) of the body (17) of each deflector (16) and the second part (20) of the body (17) of each deflector (16) are curved, the first part (19) having an inverted curvature with respect to the second part (20).

6. Cooking appliance (1) according to any one of claims 1 to 5, wherein the deflectors (16) are connected to a lower edge (18) of the contoured wall (13) of the basket (5).

7. Cooking appliance (1) according to claim 6, wherein the deflectors (16) and the contoured wall (13) of the basket (5) come from one single and same part.

8. Cooking appliance (1) according to claim 6, wherein assembly means are arranged between each of the deflectors (16) and the lower edge (18) of the contoured wall (13) of the basket (5).

9. Cooking appliance (1) according to claim 8, wherein the assembly means are chosen from among a clip system, a bayonet system and a press-fitting system.

10. Cooking appliance (1) according to one of claims 6 to 9, wherein the perforated bottom (14) comprises a removable grille (15) supported by upper edges (28) of the deflectors (16) and, if necessary, supported by the ring (27) fixed to the second parts (20) of the deflectors (16).

11. Cooking appliance (1) according to any one of claims 1 to 10, wherein lower edges (30) of the bodies (17) of the deflectors (16) fall into one same plane (P) and form supports making it possible to stably place the basket (5) on a support plane.

12. Cooking appliance (1) according to claim 11, wherein the basket (5) comprises a handle (7) comprising a lower end (38) falling into one same plane (P) as that into which the lower edges (30) of the bodies (17) of the deflectors (16) fall.

13. Cooking appliance (1) according to any one of claims 1 to 12, wherein the vessel (4) comprises a bottom (37) and a contoured wall (25) provided with an upper edge (31), the basket (5) comprising a support tab (35) bearing on said upper edge (31) to support the basket (5) housed in the vessel (4) such that the lower edges (30) of the deflectors (16) are kept at a distance from the bottom (37) of the vessel (4).

14. Method for manufacturing a basket (5) of a cooking appliance (1) according to claim 7 or any one of claims 10 to 13 connected to claim 7, comprising the following steps:
- disposing a metal sheet (26),
- cutting the contoured wall (13) and the deflectors (16) on the metal sheet (26),
- folding the metal sheet (26) thus cut to form the contoured wall (13) and the deflectors (16).

15. Method according to claim 14, wherein the cutting of the metal sheet (26) is done by laser cutting.
